(19) Europäisches Patentamt
European Patent Office
Office européen des brevets

(11) **EP 3 536 736 B1**

(12) **EUROPEAN PATENT SPECIFICATION**

(45) Date of publication and mention
of the grant of the patent:
**26.01.2022  Bulletin 2022/04**

(51) International Patent Classification (IPC):
*C08J 5/08* (2006.01)     *B29B 15/08* (2006.01)
*C08J 5/04* (2006.01)     *C08K 7/14* (2006.01)

(21) Application number: **18761920.0**

(22) Date of filing: **11.06.2018**

(52) Cooperative Patent Classification (CPC):
(C-Sets available)
**C08J 5/043; C08J 5/08; C08K 7/14;** C08J 2377/06;
C08K 2201/003; C08K 2201/004          (Cont.)

(86) International application number:
**PCT/JP2018/022249**

(87) International publication number:
**WO 2018/159861 (07.09.2018 Gazette 2018/36)**

(54) **GLASS FIBER REINFORCED RESIN MOLDED ARTICLE**

GLASFASERVERSTÄRKTER HARZFORMARTIKEL

ARTICLE MOULÉ EN RÉSINE RENFORCÉE PAR DES FIBRES DE VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.10.2017   JP 2017195811**

(43) Date of publication of application:
**11.09.2019   Bulletin 2019/37**

(73) Proprietor: **Nitto Boseki Co., Ltd.**
**Gonome**
**Fukushima-shi**
**Fukushima 960-8161 (JP)**

(72) Inventors:
• **NUKUI, Yosuke**
**Fukushima-shi**
**Fukushima 960-8161 (JP)**
• **SEKIKAWA, Hironobu**
**Moka-shi**
**Tochigi 321-4367 (JP)**
• **TSUCHIGANE, Akane**
**Fukushima-shi**
**Fukushima 960-8161 (JP)**

(74) Representative: **Schön, Christoph**
**Dr. Schön, Neymeyr & Partner mbB**
**Bavariaring 26**
**80336 München (DE)**

(56) References cited:
**EP-A1- 2 695 913          EP-A1- 2 873 800
WO-A1-2012/137271     WO-A1-2013/147069
JP-A- H04 292 651        JP-A- 2001 026 701
JP-A- 2013 155 311       JP-A- 2013 216 003
JP-A- 2016 166 276       JP-A- 2017 052 974**

• **DATABASE WPI Week 201665 2016 Thomson
Scientific, London, GB; AN 2016-577021
XP002798107, & JP 2016 166276 A (ASAHI KASEI
CORP) 15 September 2016 (2016-09-15) & JP 2016
166276 A (ASAHI KASEI CORP) 15 September
2016 (2016-09-15)**

(52) Cooperative Patent Classification (CPC): (Cont.)

C-Sets
**C08K 7/14, C08L 77/06**

**Description**

Technical Field

The present invention relates to glass fiber-reinforced resin molded articles.

Background Art

Conventionally, glass fibers have been widely used for various applications so as to enhance performance of resin molded articles. Here, examples of one of the major performances enhanced by glass fiber include the mechanical strength, such as tensile strength and/or bending strength, of a glass fiber-reinforced resin molded article. To date, it has been examined how the mechanical strength of a glass fiber-reinforced resin molded article is affected by individual glass fiber characteristics such as the fiber diameter of glass fibers (usually, a glass fiber has a plurality of glass filaments bundled; the average diameter of the glass filaments is referred to as a fiber diameter of the glass fibers), the length of glass fibers in the glass fiber-reinforced resin molded article, the glass content of the glass fiber-reinforced resin molded article, and the cross-sectional shape of the glass filaments (see, for instance, Patent Literature 1).

EP 2 873 800 A1 discloses a downhole tool member for hydrocarbon resource recovery, comprising a shaped body of a polyglycolic acid resin blended with an inorganic or organic short fiber reinforcement material, wherein the inorganic short fibers are glass fibers.

EP 2 695 913 A1 and corresponding WO 2012/137271 A1 disclose a liquid crystalline polyester composition containing 100 parts by weight of a liquid crystalline polyester, 10 to 100 parts by weight of mica and 10 to 100 parts by weight of an inorganic fibrous filler having a number-average fiber length of 30 to 500 $\mu$m.

JP 2016 166276 A discloses a polyamide resin hollow molded composition comprising 25% to 85% by mass of a polyamide resin and 15% to 75% by mass of glass fiber, wherein the ratio of the weight average fiber length of the glass fiber to the median value of the glass fiber in the polyamide resin hollow molded composition is 1.6 or more.

JP 2013 155311 A discloses a method for producing a resin composition in which a weight average fiber length of a fibrous filler included therein is controlled to 400 $\mu$m or less.

WO 2013/147069 A1 discloses a glass fiber reinforced polyamide resin composition comprising a polyamide and a glass fiber, wherein the polyamide has a relative viscosity of 2.0 or more and 4.0 or less, and the glass fiber is a urethane resin and/or an acrylic resin, wherein the average fiber length is 200 $\mu$m or more and 600 $\mu$m or less, the average fiber diameter is 5 $\mu$m or more and 11 $\mu$m or less, and the fiber is contained in an amount of 10% by mass or more and 80% by mass or less based on the total amount of the composition.

JP 2001 026701 A discloses a liquid crystal polyester resin composition comprising with a thermosetting resin surface-treated glass fibers and a liquid crystal polyester resin where the ignition loss of the component the glass fibers is adjusted to 0.05-0.4 wt.%.

JP 2017 052974 A discloses a glass fiber-reinforced resin molded article containing a glass fiber in an amount ranging from 10 to 90 mass% and a resin in an amount ranging from 90 to 10 mass% with respect to the total amount of the glass fiber-reinforced resin molded article.

JP H04 292651 A discloses a liquid crystalline polyester resin composition obtained by melting and kneading 100 weight parts of a liquid crystalline polyester resin with 5-200 weight parts of glass fibers having an average fiber diameter of 3-15 mm, wherein the number-average fiber length of the glass fibers is 0.12-0.25 mm and the weight-average fiber length is 0.25-0.6 mm.

JP 2013 216003 A discloses a composite material comprising a thermoplastic resin and glass staple fiber characterized in that the glass staple fiber has a fiber diameter of 1 to 7 $\mu$m and an average fiber length of 30 to 300 $\mu$m.

Citation List

Patent Literature

Patent Literature 1: Japanese Patent Laid-Open No. 2009-269952

Summary of Invention

Technical Problem

Recently, as glass fiber-reinforced resin molded articles in automobile parts and fine parts and thin parts in the electrical/electronic fields have increasingly been used, better glass fiber-reinforced resin molded articles are sought that have, in addition to conventional mechanical strength, excellent heat resistance and molding processability.

Unfortunately, there has not been sufficient examination about glass fiber characteristics that make it possible to realize a glass fiber-reinforced resin molded article having all of excellent mechanical strength, heat resistance, and molding processability.

The present invention has been made in light of the above situations. The purpose of the present invention is to reveal the glass fiber characteristics that contribute to the mechanical strength, heat resistance, long-term durability, and molding processability of a glass fiber-reinforced resin molded article, and to provide a glass fiber-reinforced resin molded article having excellent mechanical strength, heat resistance, and molding processability.

Solution to Problem

To achieve the goal, the present invention provides a glass fiber-reinforced resin molded article as defined in claim 1.

When the fiber diameter D of the glass fibers in the glass fiber-reinforced resin molded article of the present invention is less than 4.0 $\mu$m, there is a concern that a production worker's health may be harmed during production steps of the glass fibers and the glass fiber-reinforced resin molded article. When the fiber diameter D of the glass fibers in the glass fiber-reinforced resin molded article of the present invention, in turn, exceeds 7.5 $\mu$m, it is impossible to produce a glass fiber-reinforced resin molded article having sufficient mechanical strength.

When the number-average fiber length L of the glass fibers in the glass fiber-reinforced resin molded article of the present invention is less than 195 $\mu$m, it is impossible to produce a glass fiber-reinforced resin molded article having sufficient mechanical strength. When the number-average fiber length L of the glass fibers in the glass fiber-reinforced resin molded article of the present invention, in turn, exceeds 225 $\mu$m, the processability may decrease during a molding process, in particular, at the time of twin-screw kneading.

When the glass fiber volume fraction V of the glass fiber-reinforced resin molded article of the present invention is less than 6.0%, it is impossible to produce a glass fiber-reinforced resin molded article having sufficient mechanical strength. When the glass fiber volume fraction V of the glass fiber-reinforced resin molded article of the present invention, in turn, exceeds 25.0%, the molding processability deteriorates.

When, in the glass fiber-reinforced resin molded article of the present invention, the fiber diameter D ($\mu$m) of the glass fibers, the fiber length L ($\mu$m) of the glass fibers, and the glass fiber volume fraction V (%) do not satisfy formula (1), that is, when $D^2 \times L/V$ is less than 400, the molding processability deteriorates. When, in the glass fiber-reinforced resin molded article of the present invention, $D^2 \times L/V$ is, in turn, more than 700, it is impossible to produce a glass fiber-reinforced resin molded article having sufficient mechanical strength.

For the glass fiber-reinforced resin molded article of the present invention, D is in a range from 4.0 to 7.5 $\mu$m; L is in a range from 195 to 225 $\mu$m; V is in a range from 6.0 to 25.0%; and D, L, and V satisfy the following formula (1).

$$400.0 \le D^2 \times L/V \le 700.0 \dots (1)$$

According to the above glass fiber-reinforced resin molded article of the present invention, when D, L, and V are within the above-described corresponding ranges and satisfy the conditions of the above formula (1), the glass fiber-reinforced resin molded article has higher mechanical strength, higher heat resistance, and better molding processability. Further, when D, L, and V of the glass fiber-reinforced resin molded article of the present invention satisfy the formula (1), the glass fiber-reinforced resin molded article of the present invention has high long-term durability.

As used herein, the wording "having higher mechanical strength" means that the tensile strength of the glass fiber-reinforced resin molded article is 190.0 MPa or higher. Furthermore, the wording "having higher heat resistance" means that the deflection temperature under load of the glass fiber-reinforced resin molded article is 258.0°C or higher. In addition, the wording "high long-term durability" means that the fatigue strength is 78 MPa or higher and the creep rupture strength when the stress loading time is 1000 h is 114 MPa or higher.

In addition, for the glass fiber-reinforced resin molded article of the present invention, it is preferable that D is in a range from 4.5 to 7.0 $\mu$m; L is in a range from 200 to 223 $\mu$m; V is in a range from 10.0 to 20.0%; and D, L, and V satisfy the following formula (2).

$$29.7 \le D^{4/5} \times L^2/(1000 \times V^{2/3}) \le 34.8 \dots (2)$$

According to the above glass fiber-reinforced resin molded article of the present invention, when D, L, and V are within the above-described corresponding ranges and satisfy the conditions of the above formula (2), the glass fiber-reinforced resin molded article more reliably has extremely high mechanical strength, extremely high heat resistance, and better molding processability and further has high long-term durability.

As used herein, the wording "having extremely high mechanical strength" means that the tensile strength of the glass fiber-reinforced resin molded article is 195.0 MPa or higher. In addition, the wording "having extremely high heat resistance" means that the deflection temperature under load of the glass fiber-reinforced resin molded article is 259.5°C or higher.

Description of Embodiments

Next, embodiments of the present invention will be described further in detail.

A glass fiber-reinforced resin molded article according to an embodiment of the present invention is characterized in that glass fibers contained in the glass fiber-reinforced resin molded article have a fiber diameter D (μm) in a range from 4.0 to 7.5 μm; the glass fibers contained in the glass fiber-reinforced resin molded article have a number-average fiber length L (μm) in a range from 195 to 225 μm; the glass fiber-reinforced resin molded article has a glass fiber volume fraction V (%) in a range from 6.0 to 25.0%; and D, L, and V satisfy the following formula (1). According to the glass fiber-reinforced resin molded article of the present invention, when D, L, and V are within the above-described corresponding ranges and satisfy the conditions of the following formula (1), the glass fiber-reinforced resin molded article has high mechanical strength, high heat resistance, and excellent molding processability.

$$400.0 \leq D^2 \times L/V \leq 700.0 \ ... \ (1)$$

When the fiber diameter D of the glass fibers in the glass fiber-reinforced resin molded article of this embodiment is less than 4.0 μm, there is a concern that a production worker's health may be harmed during production steps of the glass fibers and the glass fiber-reinforced resin molded article. When the fiber diameter D of the glass fibers, in turn, exceeds 7.5 μm, it is impossible to produce a glass fiber-reinforced resin molded article having sufficient mechanical strength.

Here, in the glass fiber-reinforced resin molded article of this embodiment, the fiber diameter D of the glass fibers is preferably from 5.0 to 7.2 μm, more preferably from 5.5 to 7.0 μm, and most preferably from 6.0 to 6.9 μm.

Here, when the cross-sectional shape of a glass filament constituting a glass fiber is a perfect circular shape or substantially perfect circular shape, the fiber diameter of the glass fiber means a diameter of the glass filament. Meanwhile, when the cross-sectional shape of a glass filament is other than a perfect circular shape or substantially perfect circular shape (e.g., an elliptical shape, oval shape), the fiber diameter of the glass fiber means the diameter of a perfect circle having the same area as that of the cross-sectional shape (referred to as a converted fiber diameter).

Note that the fiber diameter of the glass fibers in the glass fiber-reinforced resin molded article of this embodiment may be calculated such that: for instance, a cross section of the glass fiber-reinforced resin molded article is first polished; an electron microscope is then used to measure the diameter of each of 100 glass filaments when the cross-sectional shape of each glass filament is a perfect circular shape or substantially perfect circular shape or to calculate, or when the cross-sectional shape of each glass filament is other than a perfect circular shape or substantially perfect circular shape, a converted fiber diameter based on a cross section area thereof after the cross-section area thereof is calculated; and thereafter, measured or calculated diameters or converted fiber diameters are averaged.

Note that each glass fiber usually has a plurality of glass filaments bundled. However, the glass fiber-reinforced resin molded article undergoes a molding process; and the bundles are thus separated and dispersed in a glass filament state in the glass fiber-reinforced resin molded article.

When the number-average fiber length L of the glass fibers in the glass fiber-reinforced resin molded article of this embodiment is less than 195 μm, it is impossible to produce a glass fiber-reinforced resin molded article having sufficient mechanical strength. When the number-average fiber length L of the glass fibers, in turn, exceeds 225 μm, the processability may decrease during a molding process, in particular, at the time of twin-screw kneading.

Here, the number-average fiber length L of the glass fibers in the glass fiber-reinforced resin molded article of this embodiment is preferably from 200 to 223 μm, more preferably from 206 to 222 μm, and even more preferably from 210 to 221 μm.

Note that the number-average fiber length of the glass fibers in the glass fiber-reinforced resin molded article of this embodiment may be calculated using the following procedure. First, a glass fiber-reinforced resin molded article is heated for 0.5 to 24 h in a muffle furnace at 650°C to decompose organic matter. Next, the remaining glass fibers are transferred to a glass dish and are then dispersed on the dish surface by using acetone. Then, the fiber lengths of 1000 or more glass fibers dispersed on the dish surface are measured with a stereoscopic microscope and averaged to calculate the number-average fiber length of the glass fibers.

When the glass fiber volume fraction V of the glass fiber-reinforced resin molded article of this embodiment is less than 6.0%, it is impossible to produce a glass fiber-reinforced resin molded article having sufficient mechanical strength. When the glass fiber volume fraction V, in turn, exceeds 25.0%, the molding processability deteriorates.

Here, the glass fiber volume fraction V of the glass fibers in the glass fiber-reinforced resin molded article of this embodiment is preferably from 10.0 to 20.0%, and more preferably from 15.0 to 19.5%.

Note that the glass fiber volume fraction of the glass fiber-reinforced resin molded article of this embodiment may be calculated in accordance with JIS K 7053.

When, in the glass fiber-reinforced resin molded article of this embodiment, the fiber diameter D ($\mu$m) of the glass fibers, the fiber length L ($\mu$m) of the glass fibers, and the glass fiber volume fraction V (%) do not satisfy formula (1), that is, when $D^2 \times L/V$ is less than 400, the molding processability deteriorates. When $D^2 \times L/V$ is, in turn, more than 700, it is impossible to produce a glass fiber-reinforced resin molded article having sufficient mechanical strength.

When $D^2 \times L/V$ satisfies the following formula (1), the glass fiber-reinforced resin molded article has higher mechanical strength, higher heat resistance, and better molding processability and further has high long-term durability.

$$400.0 \leq D^2 \times L/V \leq 700.0 \ldots (1)$$

In addition, it is preferable that D, L, and V in the glass fiber-reinforced resin molded article of this embodiment satisfy the following formula (3). When $D^2 \times L/V$ satisfies the following formula (3), the glass fiber-reinforced resin molded article has extremely high mechanical strength, extremely high heat resistance, and better molding processability and further has high long-term durability.

$$450.0 \leq D^2 \times L/V \leq 600.0 \ldots (3)$$

In addition, it is preferable that D, L, and V in the glass fiber-reinforced resin molded article of this embodiment satisfy the following formula (4). When $D^{4/5} \times L^2/(1000 \times V^{2/3})$ satisfies the following formula (4), the glass fiber-reinforced resin molded article has higher mechanical strength, higher heat resistance, and better molding processability and further has high long-term durability.

$$27.5 \leq D^{4/5} \times L^2/(1000 \times V^{2/3}) \leq 36.5 \ldots (4)$$

It is particularly preferable that D, L, and V in the glass fiber-reinforced resin molded article of this embodiment satisfy the following formula (2). When $D^{4/5} \times L^2/(1000 \times V^{2/3})$ satisfies the following formula (2), the glass fiber-reinforced resin molded article more reliably has extremely high mechanical strength, extremely high heat resistance, and better molding processability and further has high long-term durability.

$$29.7 \leq D^{4/5} \times L^2/(1000 \times V^{2/3}) \leq 34.8 \ldots (2)$$

In the glass fiber-reinforced resin molded article of this embodiment, the cross-sectional shape of a glass fiber (usually, each glass fiber has a plurality of glass filaments bundled; this glass filament cross-sectional shape is referred to as the cross-sectional shape of glass fiber(s)) is not particularly limited. In the glass fiber-reinforced resin molded article of this embodiment, examples of the cross-sectional shape adoptable for each glass fiber (i.e., the cross-sectional shape adoptable for each glass filament) include a perfect circle shape, an elliptical shape, and an oval shape. When the cross-sectional shape of each glass fiber is an elliptical shape or an oval shape, the ratio of the long diameter to the short diameter of the cross-sectional shape (long diameter/short diameter) is, for instance, in a range from 2.0 to 10.0. From the viewpoint of increasing the mechanical strength of each glass fiber-reinforced resin molded article, the cross-sectional shape of each glass fiber is preferably an oval shape and the ratio of the long diameter to the short diameter of the cross-sectional shape is preferably from 2.2 to 6.0.

In the glass fiber-reinforced resin molded article of this embodiment, the glass composition of glass fiber-constituting glass is not particularly limited. In the glass fiber-reinforced resin molded article of this embodiment, examples of the glass composition adoptable for each glass fiber include: the most common E-glass composition (a composition containing 52.0 to 56.0 mass% of $SiO_2$, 12.0 to 16.0 mass% of $Al_2O_3$, a total of 20.0 to 25.0 mass% of MgO and CaO, and 5.0 to 10.0 mass% of $B_2O_3$ based on the total amount of each glass fiber); a high strength, highly elastic glass composition (a composition containing 64.0 to 66.0 mass% of $SiO_2$, 24.0 to 26.0 mass% of $Al_2O_3$, and 9.0 to 11.0 mass% of MgO based on the total amount of each glass fiber); a highly elastic, easy-to-produce glass composition (a composition containing 57.0 to 60.0 mass% of $SiO_2$, 17.5 to 20.0 mass% of $Al_2O_3$, 8.5 to 12.0 mass% of MgO, 10.0 to 13.0 mass% of CaO, and 0.5 to 1.5 mass % of $B_2O_3$ based on the total amount of each glass fiber, wherein the total amount of $SiO_2$, $Al_2O_3$, MgO, and CaO is 98.0 mass% or more); and a low dielectric constant and low dielectric tangent glass composition (a composition containing 52.0 to 57.0 mass% of $SiO_2$, 13.0 to 17.0 mass% of $Al_2O_3$, 15.0 to 21.5 mass% of $B_2O_3$, 2.0 to 6.0 mass% of MgO, 2.0 to 6.0 mass% of CaO, 1.0 to 4.0 mass% of $TiO_2$, and less than 1.5 mass% of $F_2$ based on the total amount of each glass fiber, wherein the total amount of $Li_2O$, $Na_2O$, and $K_2O$ is less than 0.6 mass%). From the viewpoint of increasing the mechanical strength of each glass fiber-reinforced resin molded article, the glass composition of each glass fiber is preferably the high strength, highly elastic glass composition or highly elastic, easy-to-produce glass composition.

The glass fiber having the glass composition described above may be produced as follows. First, a glass raw material (glass batch) dispensed so as to provide the composition described above is supplied to a melting furnace and is then melted at, for instance, a temperature ranging from 1450 to 1550°C. Next, the molten glass batch (molten glass) is discharged from 1 to 8000 nozzle tips or holes of a bushing controlled at a given temperature, wound at a high speed, cooled while stretched, and solidified to produce each glass fiber having 1 to 8000 glass filaments bundled. Here, each glass filament discharged from one nozzle tip or hole, cooled, and solidified usually has a perfect circle-shaped cross-sectional shape. By contrast, when the nozzle tip has a non-circular shape and has a protrusion and/or a notch used to rapidly cool the molten glass, it is possible to produce each glass filament having a non-circular (e.g., elliptical, oval) cross-sectional shape by controlling the temperature conditions.

In the glass fiber-reinforced resin molded article of this embodiment, the surface of each glass fiber may be coated with organic matter so as to increase attachment between the glass fiber and a resin and provide increased uniform dispersion of the glass fiber in a mixture of the glass fiber and a resin or inorganic material. Examples of such organic matter include urethane resins, epoxy resins, vinyl acetate resins, acrylic resins, modified polypropylene (in particular, carboxylic acid-modified polypropylene), and copolymers of (poly)carboxylic acid (in particular, maleic acid) and unsaturated monomers. In addition, in the glass fiber-reinforced resin molded article of this embodiment, the glass fiber may be coated with a resin composition containing, in addition to any of the above resins, a silane coupling agent, a lubricant, and/or a surfactant, etc. Each glass fiber is coated with such a resin composition at a proportion from 0.1 to 2.0 mass% while the mass of each glass fiber in the resin composition-uncoated state is used as a reference. Note that the glass fiber may be coated with organic matter such that: during the glass fiber production step, for instance, a known procedure using a roller applicator, etc., is used to coat the glass fiber with a resin solution or a resin composition solution; and the glass fiber coated with the resin solution or resin composition solution is then dried.

Examples of the silane coupling agent include amino silanes (e.g., γ-aminopropyltriethoxysilane, N-β-(aminoethyl)-γ-aminopropyltrimethoxysilane, N-β-(aminoethyl)-N'-β-(aminoethyl)-γ-aminopropyltnmethoxysilane, γ-anilinopropyltrimethoxysilane), chlorosilanes (e.g., γ-glycidoxypropyltrimethoxysilane), epoxysilanes (e.g., β-(3,4-epoxycyclohexyl)ethyltrimethoxysilane), mercaptosilanes (e.g., γ-mercaptotrimethoxysilanes such as γ-chloropropyltrimethoxysilane), vinylsilanes (e.g., vinyl trimethoxysilane, N-β-(N-vinylbenzylaminoethyl)-γ-aminopropyltrimethoxysilane), acrylsilanes (e.g., γ-methacryloxypropyltrimethoxysilane), and cationic silanes (e.g., N-(vinylbenzyl)-2-aminoethyl-3 -aminopropyltrimethoxysilane hydrochloride, N-phenyl-3 - aminopropyltrimethoxysilane hydrochloride). Regarding the silane coupling agents, these compounds may be used singly or in combinations of two or more.

Examples of the lubricant include modified silicone oil, animal oil (e.g., beef tallow) and hydrogenated products thereof, plant oil (e.g., soybean oil, coconut oil, rapeseed oil, palm oil, castor oil) and hydrogenated products thereof, animal wax (e.g., beeswax, lanolin), plant wax (e.g., candelilla wax, carnauba wax), mineral-based wax (e.g., paraffin wax, montan wax), condensates of higher saturated fatty acid and higher saturated alcohol (e.g., stearic acid esters such as lauryl stearate), polyethyleneimine, polyalkylpolyaminealkylamide derivatives, fatty acid amides (e.g., dehydrated condensates of polyethylene amine (e.g., diethylenetriamine, triethylenetetraamine, tetraethylenepentamine) and fatty acid (e.g., lauric acid, myristic acid, palmitic acid, stearic acid), and quaternary ammonium salts (e.g., alkyltrimethylammonium salts such as lauryltrimethylammonium chloride). These lubricants may be used singly or in combinations of two or more.

Examples of the surfactant include nonionic surfactants, cationic surfactants, anionic surfactants, and amphoteric surfactants. These surfactants may be used singly or in combinations of two or more.

Examples of the nonionic surfactants include ethylene oxide propylene oxide alkyl ether, polyoxyethylene alkyl ether, polyoxyethylene-polyoxypropylene-block copolymers, alkylpolyoxyethylene-polyoxypropylene-block copolymer ethers, polyoxyethylene fatty acid esters, polyoxyethylene fatty acid monoesters, polyoxyethylene fatty acid diesters, polyoxyethylene sorbitan fatty acid esters, glycerol fatty acid ester ethylene oxide adducts, polyoxyethylene castor oil ethers, cured castor oil ethylene oxide adducts, alkylamine ethylene oxide adducts, fatty acid amide ethylene oxide adducts, glycerol fatty acid esters, polyglycerin fatty acid esters, pentaerythritol fatty acid esters, sorbitol fatty acid esters, sorbitan fatty acid esters, sucrose fatty acid esters, polyhydric alcohol alkyl ethers, fatty acid alkanolamide, acetylene glycol, acetylene alcohol, ethylene oxide adducts of acetylene glycol, and ethylene oxide adducts of acetylene alcohol.

Examples of the cationic surfactants include alkyl dimethyl benzyl ammonium chloride, alkyl trimethyl ammonium chloride, alkyl dimethyl ammonium ethyl sulfate, higher alkylamine salts (e.g., acetate, hydrochloride), ethylene oxide adducts of higher alkylamine, condensates of higher fatty acid and polyalkylenepolyamine, ester salts of higher fatty acid and alkanolamine, salts of higher fatty acid amide, imidazoline cationic surfactants, and alkyl pyridinium salts.

Examples of the anionic surfactants include higher alcohol sulfuric acid ester salts, higher alkyl ether sulfuric acid ester salts, α-olefin sulfuric acid ester salts, alkyl benzenesulfonic acid salts, α-olefin sulfonic acid salts, reaction products of fatty acid halide and N-methyl taurine, sulfosuccinic acid dialkyl ester salts, higher alcohol phosphoric acid ester salts, and phosphoric acid ester salts of higher alcohol ethylene oxide adducts.

Examples of the amphoteric surfactants include: amino acid amphoteric surfactants such as alkyl aminopropionic acid alkali metal salts; betaine amphoteric surfactants such as alkyl dimethyl betaine; and imidazoline amphoteric surfactants.

The glass fiber-reinforced resin molded article of this embodiment contains, in addition to the above-described glass fiber, a thermoplastic resin and an additive(s) other than glass fiber. The volume fraction of the thermoplastic resin in the glass fiber-reinforced resin molded article of this embodiment is, for instance, from 50.0 to 97.0%. In addition, the volume fraction of the additive(s) other than glass fiber in the glass fiber-reinforced resin molded article of this embodiment is, for instance, from 0 to 40.9 mass%.

Here, examples of the thermoplastic resin include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenyl sulfone (PPSU), polyphenylene ether (PPE), modified polyphenylene ether (m-PPE), polyaryl ketone, liquid crystal polymers (LCP), fluorine resins, polyetherimide (PEI), polyarylate (PAR), polysulfone (PSF), polyamide-imide (PAI), polyamino bismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and poly-lactic acid. Among them, preferred is polyamide, polybutylene terephthalate, or polycarbonate because their applications often require high tensile strength, high bending strength, high bending elastic modulus, and high impact resistance. More preferred is polyamide.

Specific examples of the polyethylene include high density polyethylene (HDPE), intermediate density polyethylene, low density polyethylene (LDPE), linear low density polyethylene (LLDPE), and ultrahigh-molecular-weight polyethylene.

Examples of the polypropylene include isotactic polypropylene, atactic polypropylene, syndiotactic polypropylene, and mixtures thereof.

Examples of the polystyrene include: general-purpose polystyrene (GPSS), which is atactic polystyrene with an atactic structure; high impact polystyrene (HIPS), in which a rubber component is added to GPPS; and syndiotactic polystyrene with a syndiotactic structure.

Examples of the methacrylic resins include: polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester; and polymers obtained by copolymerizing two or more of the above compounds.

Examples of the polyvinyl chloride include: vinyl chloride homopolymers obtained by polymerization using a conventionally known process such as emulsion polymerization, suspension polymerization, microsuspension polymerization, or bulk polymerization; copolymers of a vinyl chloride monomer and a copolymerizable monomer; and graft copolymers in which a vinyl chloride monomer is subjected to graft polymerization with a polymer.

Examples of the polyamide include: one of components such as polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecaneamide (nylon 11), polyundecamethylene adipamide (nylon 116), polydodecane amide (nylon 12), polyxylene adipamide (nylon XD6), polyxylene sebacamide (nylon XD10), polymetaxylene adipamide (nylon MXD6), polyparaxylene adipamide (nylon PXD6), polytetramethylene terephthalamide (nylon 4T), polypentamethylene terephthalamide (nylon 5T), polyhexamethylene terephthalamide (nylon 6T), polyhexamethylene isophthalamide (nylon 6I), polynonamethylene terephthalamide (nylon 9T), polydecamethylene terephthalamide (nylon 10T), polyundecamethylene terephthalamide (nylon 11T), polydodecamethylene terephthalamide (nylon 12T), polytetramethylene isophthalamide (nylon 4I), polybis(3-methyl-4-aminohexyl)methane terephthalamide (nylon PACMT), polybis(3-methyl-4-aminohexyl)methane isophthalamide (nylon PACMI), polybis(3-methyl-4-aminohexyl)methane dodecamide (nylon PACM12), polybis(3-methyl-4-aminohexyl)methane tetradecamide (nylon PACM14); copolymers obtained by combining the above two or more components; and mixtures thereof.

Examples of the polyacetal include: homopolymers having an oxymethylene unit as a major repeating unit; and copolymers primarily composed of an oxymethylene unit and including, in the main chain, an oxyalkylene unit having 2 to 8 adjacent carbon atoms.

Examples of the polyethylene terephthalate include polymers obtained by subjecting a terephthalic acid or derivative thereof and ethylene glycol to polycondensation.

Examples of the polybutylene terephthalate include polymers obtained by subjecting a terephthalic acid or derivative thereof and 1,4-butanediol to polycondensation.

Examples of the polytrimethylene terephthalate include polymers obtained by subjecting a terephthalic acid or derivative thereof and 1,3-propanediol to polycondensation.

Examples of the polycarbonate include: polymers obtained by transesterification in which a dihydroxy diaryl compound and a carbonic acid ester such as diphenyl carbonate are reacted in a molten state; and polymers obtained by a phosgene process in which a dihydroxyaryl compound and a phosgene are reacted.

Examples of the polyarylene sulfide include: linear polyphenylene sulfide; crosslinked polyphenylene sulfide of which the molecular weight is made higher by polymerization followed by a curing reaction; and polyphenylene sulfide sulfone, polyphenylene sulfide ether, and polyphenylene sulfide ketone.

Examples of the modified polyphenylene ether include: polymer alloys of poly(2,6-dimethyl-1,4-phenylene)ether and polystyrene; polymer alloys of poly(2,6-dimethyl-1,4-phenylene)ether and a styrene/butadiene copolymer; polymer alloys of poly(2,6-dimethyl-1,4-phenylene)ether and a styrene/maleic anhydride copolymer; polymer alloys of poly(2,6-dimethyl-1,4-phenylene)ether and polyamide; and polymer alloys of poly(2,6-dimethyl-1,4-phenylene)ether and a styrene/butadiene/acrylonitrile copolymer.

Examples of the polyaryl ketone include poly ether ketone (PEK), polyether ether ketone (PEEK), polyether ketone ketone (PEKK), and polyether ether ketone ketone (PEEKK).

Examples of the liquid crystal polymer (LCP) include (co)polymers composed of at least one structural unit selected from, as thermotropic liquid crystal polyester, aromatic hydroxycarbonyl units, aromatic dihydroxy units, aromatic dicarbonyl units, aliphatic dihydroxy units, and aliphatic dicarbonyl units.

Examples of the fluorine resins include polytetrafluoroethylene (PTFE), perfluoroalkoxy resins (PFA), fluorinated-ethylene-propylene resins (FEP), fluorinated-ethylene-tetrafluoroethylene resins (ETFE), polyvinyl fluoride (PVF), polyvinylidene fluoride (PVDF), polychlorotrifluoroethylene (PCTFE), and ethylene/chlorotrifluoroethylene (ECTFE).

Examples of the ionomer (IO) resins include olefin or styrene/unsaturated carboxylic acid copolymers produced by neutralizing a portion of a carboxyl group by using a metal ion.

Examples of the olefin/vinyl alcohol resins include ethylene/vinyl alcohol copolymers, propylene/vinyl alcohol copolymers, saponified ethylene/vinyl acetate copolymers, and saponified propylene/vinyl acetate copolymers.

Examples of the cyclic olefin resins include: monocyclic compounds such as cyclohexene; polycyclic compounds such as tetracyclopentadiene; and polymers of cyclic olefin monomers.

Examples of the poly-lactic acid include: poly L-lactic acid, which is an L-homopolymer; poly D-lactic acid, which is a D-homopolymer; and stereocomplex poly-lactic acid, which is a mixture thereof.

Examples of the cellulose resins include methyl cellulose, ethyl cellulose, hydroxy cellulose, hydroxymethyl cellulose, hydroxyethyl cellulose, hydroxyethyl methyl cellulose, hydroxypropyl methyl cellulose, cellulose acetate, cellulose propionate, and cellulose butyrate.

The thermoplastic resins may be used singly or in combinations of two or more.

Examples of the additive(s) other than glass fiber include: reinforcing fibers other than glass fibers (e.g., carbon fiber, metal fiber); fillers other than glass fibers (e.g., glass powder, talc, mica); fire retardants; UV absorbers; thermostabilizers; antioxidants; antistatic agents; fluidity-improving agents; anti-blocking agents; lubricants; nucleating agents; antimicrobial agents; and pigments.

The glass fiber-reinforced resin molded article of this embodiment may be produced by subjecting a mixture composed of the above glass fiber, the above thermoplastic resin, and the above additive(s) other than glass fiber to a known molding process such as injection molding, injection compression molding, two-color molding, hollow molding, foam molding (including supercritical fluid foam molding), insert molding, in-mold coating, extrusion molding, sheet molding, thermoforming, rotational molding, lamination molding, press molding, blow molding, stamping molding, infusion technique, hand lay-up technique, spray-up technique, resin transfer molding, sheet molding compound technique, bulk molding compound technique, pultrusion technique, filament winding technique, or the like.

Examples of applications of the glass fiber-reinforced resin molded article of this embodiment include electronic device housings, electronic components (connectors, sockets, LEDs, sealed molding articles), vehicle exterior members (e.g., bumpers, fenders, hoods, air dams, wheel covers), vehicle interior members (e.g., door trims, ceiling materials), vehicle engine accessory members (e.g., oil pans, engine covers, intake manifolds, exhaust manifolds), vehicle mechanism parts (pulleys, sealing rings, gears, bearings), muffler-related members (e.g., muffling members), and high-pressure tanks.

The following illustrates Examples and Comparative Examples of the present invention.

Examples

[Examples 1 to 6 and Comparative Examples 1 to 5]

First, to provide the fiber diameter of glass fibers, the number-average fiber length of the glass fibers, and the glass fiber volume fraction of each glass fiber-reinforced resin molded article as designated in Examples 1 to 6 and Comparative Examples 1 to 5 of Table 1 or 2, the glass fiber diameter, the cutting length (usually, about 1 to 5 mm), and the blending amount of glass chopped strands with an E-glass composition (those produced by cutting, into glass strands with a predetermined length, a glass strand composed of a plurality of glass filaments bundled) were adjusted. These glass chopped strands and a polyamide resin PA66 (trade name: Leona 1300S; manufactured by Asahi Kasei Corporation) were kneaded with a twin-screw kneader (trade name: TEM-26SS; manufactured by TOSHIBA MACHINE CO., LTD.) to prepare resin pellets. Next, the resulting resin pellet was subjected to injection molding with an injection molding machine (trade name: NEX80; manufactured by NISSEI PLASTIC INDUSTRIAL CO., LTD.) to produce, as each test piece, an A-type dumbbell test piece (at a thickness of 4 mm) according to JIS K 7054.

The tensile strength and the deflection temperature under load of each test piece obtained were measured and calculated by the procedures indicated below. In addition, regarding Example 1 and Comparative Example 4, the fatigue strength and the creep rupture strength were also measured and calculated. Further, the processability was evaluated by determining the work conditions during kneading with the above twin-screw kneader and during molding with the above injection molding machine. The results are shown in Tables 1 and 2.

[Tensile Strength]

Each test piece was tested under conditions at a test temperature of 23°C by a static tension test according to JIS K 7054 while using a precision universal tester (trade name: AUTOGRAPH AG-5000B; manufactured by Shimadzu Corporation) to measure the tensile strength thereof.

[Deflection Temperature under Load]

Each test piece was tested under conditions at a test stress of 1.8 MPa and a programming rate of 120°C/h by using a heat distortion tester (trade name: model 148-HD500; manufactured by YASUDA SEIKI SEISAKUSHO, LTD.) to measure the flatwise deflection temperature under load according to JIS K 7191.

[Fatigue Strength]

Each test piece was tested under a condition of a test temperature of 23°C, a stress ratio of 0.1, and a frequency of 10 Hz by a tension fatigue test according to JIS K 7118 while using a hydraulic servo strength tester (trade name: Shimadzu servo pulser EHF-EV020K1-020-1A model; manufactured by Shimadzu Corporation) to measure the fatigue strength thereof when the number of repeats was $10^7$.

[Creep Rupture Strength]

Each test piece was tested under a condition of a test temperature of 23°C by a tensile creep rupture test according to JIS K 7115 while using a universal tester (manufactured by INTESCO Co., Ltd.) to measure the creep rupture time when the stress ranged from 60 to 90% of the static stress. The results were used to draw a creep rupture curve by log approximation and the creep rupture strength during 1000-h stress loading was calculated.

[Processability]

Depending on the work conditions during kneading and during molding, the processability was evaluated by the following criteria. ⊙: Production is possible without any problems during kneading and during molding. ○: There are no problems during kneading but a bridge at a hopper part occurs during molding, so that a production worker's assistance is needed. ×: Clogging at a cutting part occurs during kneading, so that a production worker's assistance is needed; besides, a bridge at a hopper part occurs during molding, so that a production worker's assistance is needed.

[Table 1]

| | Example | | | | | |
|---|---|---|---|---|---|---|
| | 1 | 2 | 3 | 4[1] | 5[1] | 6[1] |
| Glass fiber diameter D ($\mu$m) | 6.5 | 6.5 | 5.0 | 6.5 | 5.0 | 11 |
| Glass fiber number-average fiber length L ($\mu$m) | 220 | 218 | 205 | 230 | 198 | 230 |
| Glass fiber volume fraction V (%) | 15.8 | 19.0 | 12.7 | 12.7 | 15.8 | 30.4 |
| $D^2 \times L/V$ | 588.3 | 484.8 | 403.5 | 765.2 | 313.3 | 915.5 |
| $D^{4/5} \times L^2/(1000 \times V^{2/3})$ | 34.4 | 29.8 | 28.0 | 43.4 | 22.6 | 37.0 |
| Tensile strength (MPa) | 198.4 | 210.0 | 190.0 | 187.8 | 196.0 | 215.9 |
| Deflection temperature under load (°C) | 259.6 | 261.0 | 259.0 | 258.5 | 260.5 | 257.5 |
| Fatigue strength (MPa) | 89 | - | - | - | - | - |
| Creep rupture strength (MPa) | 122 | - | - | - | - | - |
| Processability | ⊙ | ⊙ | ⊙ | ⊙ | ○ | ⊙ |
| [1] Examples 4 to 6 do not fall within the scope of this invention | | | | | | |

[Table 2]

| | Comparative Example | | | | |
|---|---|---|---|---|---|
| | 1 | 2 | 3 | 4 | 5 |
| Glass fiber diameter D ($\mu$m) | 6.5 | 6.5 | 5.0 | 11 | 6.5 |
| Glass fiber number-average fiber length L ($\mu$m) | 289 | 177 | 170 | 280 | 270 |
| Glass fiber volume fraction V (%) | 4.6 | 30.4 | 22.6 | 15.8 | 9.8 |
| $D^2 \times L/V$ | 2654.4 | 246.0 | 188.1 | 2144.3 | 1164.0 |
| $D^{4/5} \times L^2/(1000 \times V^{2/3})$ | 135.0 | 14.4 | 13.1 | 84.8 | 71.2 |
| Tensile strength (MPa) | 115.3 | 218.9 | 209.0 | 180.5 | 170.0 |
| Deflection temperature under load (°C) | 253.0 | 262.0 | 263.0 | 255.6 | 258.5 |
| Fatigue strength (MPa) | - | - | - | 72 | - |
| Creep rupture strength (MPa) | - | - | - | 109 | - |
| Processability | ⊙ | x | x | ⊙ | ⊙ |

As shown in Table 1, the glass fiber-reinforced resin molded articles of Examples 1 to 3, in which glass fibers contained in the glass fiber-reinforced resin molded article have a fiber diameter D ($\mu$m) in a range from 4.0 to 7.5 $\mu$m; the glass fibers contained in the glass fiber-reinforced resin molded article have a number-average fiber length L ($\mu$m) in a range from 195 to 225 $\mu$m; the glass fiber-reinforced resin molded article has a glass fiber volume fraction V (%) in a range from 6.0 to 25.0%; and D, L, and V satisfied the following formula (1), have high mechanical strength (a tensile strength of 185.0 MPa or higher), high heat resistance (a deflection temperature under load of 255.0°C or higher), and excellent molding processability.

$$400.0 \leq D^2 \times L/V \leq 700.0 \; ... \; (1)$$

In addition, the glass fiber-reinforced resin molded article of Example 1 has high long-term durability (a fatigue strength of 78 MPa or higher and a creep rupture strength during 1000-h stress loading of 114 MPa or higher).
By contrast, as shown in Table 2, for the glass fiber-reinforced resin molded articles of Comparative Examples 1 to 5, the above formula (1) is not satisfied, and thus one or more problems occur, including problems where these glass fiber-reinforced resin molded articles do not have sufficient mechanical strength (a tensile strength of less than 185.0 MPa); these glass fiber-reinforced resin molded articles do not have sufficient heat resistance (a deflection temperature under load of less than 255.0°C); and the molding processability deteriorates.

In addition, the glass fiber-reinforced resin molded article of Comparative Example 4, for which the above formula (1) is not satisfied, does not have sufficient long-term durability (a fatigue strength of less than 78 MPa and a creep rupture strength during 1000-h stress loading of less than 114 MPa).

[Example 7 and Comparative Examples 6 to 7]

First, to provide the fiber diameter of glass fibers, the number-average fiber length of the glass fibers, and the glass fiber volume fraction of each glass fiber-reinforced resin molded article as designated in Example 7 and Comparative Examples 6 to 7 of Table 3, the glass fiber diameter, the cutting length (usually, about 1 to 5 mm), and the blending amount of glass chopped strands composed of a highly elastic, easy-to-produce glass composition-belonging glass composition (a glass composition containing 59.4 mass% of $SiO_2$, 18.9 mass% of $Al_2O_3$, 9.9 mass% of MgO, 11.1 mass% of CaO, and 0.5 mass% of $B_2O_3$ based on the total amount of each glass fiber, wherein the total of $Na_2O$ and $Fe_2O_3$ was 0.2 mass%) were adjusted. These glass chopped strands and a polyamide resin PA66 (trade name: Leona 1300S; manufactured by Asahi Kasei Corporation) were kneaded with a twin-screw kneader (trade name: TEM-26SS; manufactured by TOSHIBA MACHINE CO., LTD.) to prepare resin pellets. Next, the resulting resin pellet was subjected to injection molding with an injection molding machine (trade name: NEX80; manufactured by NISSEIPLASTIC INDUSTRIAL CO., LTD.) to produce, as each test piece, an A-type dumbbell test piece (at a thickness of 4 mm) according to JIS K 7054.

The tensile strength and the deflection temperature under load of each test piece obtained were measured and calculated by the above procedures. In addition, regarding Example 7, the fatigue strength and the creep rupture strength were also measured and calculated. Further, the processability was evaluated by determining the work conditions during kneading with the above twin-screw kneader and during molding with the above injection molding machine. Table 3 shows the results.

As shown in Table 3, even for a highly elastic, easy-to-produce glass composition, the glass fiber-reinforced resin molded article of Example 7, in which glass fibers contained in the glass fiber-reinforced resin molded article have a fiber diameter D ($\mu$m) in a range from 4.0 to 7.5 $\mu$m; the glass fibers contained in the glass fiber-reinforced resin molded article have a number-average fiber length L ($\mu$m) in a range from 195 to 225 $\mu$m; the glass fiber-reinforced resin molded article has a glass fiber volume fraction V (%) in a range from 6.0 to 25.0%; and D, L, and V satisfied the following formula (1), has high mechanical strength (a tensile strength of 185.0 MPa or higher), high heat resistance (a deflection temperature under load of 255.0°C or higher), and excellent molding processability. By contrast, even for a highly elastic, easy-to-produce glass composition, for the glass fiber-reinforced resin molded articles of Comparative Examples 6 to 7, the following formula (1) is not satisfied, and thus one or more problems occur, including problems where these glass fiber-reinforced resin molded articles do not have sufficient mechanical strength (a tensile strength of less than 185.0 MPa); these glass fiber-reinforced resin molded articles do not have sufficient heat resistance (a deflection temperature under load of less than 255.0°C); and the molding processability deteriorates.

$$400.0 \leq D^2 \times L/V \leq 700.0 \ ... \ (1)$$

[Table 3]

|  | Example 7 | Comparative Example 6 | Comparative Example 7 |
|---|---|---|---|
| Glass fiber diameter D ($\mu$m) | 6.5 | 6.5 | 6.5 |
| Glass fiber number-average fiber length L ($\mu$m) | 221 | 293 | 174 |
| Glass fiber volume fraction V (%) | 15.8 | 4.6 | 30.4 |
| $D^2 \times L/V$ | 591.0 | 2691.1 | 241.8 |
| $D^{4/5} \times L^2/(1000 \times V^{2/3})$ | 34.7 | 138.7 | 13.9 |
| Tensile strength (MPa) | 208.8 | 125.0 | 227.0 |
| Deflection temperature under load (°C) | 261.0 | 253.0 | 264.0 |
| Fatigue strength (MPa) | 93 | - | - |

(continued)

|  | Example 7 | Comparative Example 6 | Comparative Example 7 |
|---|---|---|---|
| Creep rupture strength (MPa) | 125 | - | - |
| Processability | ⊙ | ⊙ | x |

**Claims**

1. A glass fiber-reinforced resin molded article, wherein glass fibers contained in the glass fiber-reinforced resin molded article have a fiber diameter D ($\mu$m) in a range from 4.0 to 7.5 $\mu$m;

   the glass fibers contained in the glass fiber-reinforced resin molded article have a number-average fiber length L ($\mu$m) in a range from 195 to 225 $\mu$m;
   the glass fiber-reinforced resin molded article has a glass fiber volume fraction V (%) in a range from 6.0 to 25.0%; and
   D, L, and V satisfy formula (1):

$$400.0 \leq D^2 \times L/V \leq 700.0 \,...\, (1),$$

   whereby the fiber diameter D and the number-average fiber length L are determined as specified in the specification and the glass fiber volume fraction V is determined according to JIS K 7053.

2. The glass fiber-reinforced resin molded article according to claim 1, wherein D is in a range from 4.5 to 7.0 $\mu$m;

   L is in a range from 200 to 223 $\mu$m;
   V is in a range from 10.0 to 20.0%; and
   D, L, and V satisfy formula (2):

$$29.7 \leq D^{4/5} \times L^2/(1000 \times V^{2/3}) \leq 34.8 \,...\, (2).$$

**Patentansprüche**

1. Glasfaser-verstärktes Harz umfassender Formkörper, wobei

   die Glasfasern, die in dem Glasfaser-verstärktes Harz umfassenden Formkörper enthalten sind, einen Faserdurchmesser D ($\mu$m) in einem Bereich von 4,0 bis 7,5 $\mu$m aufweisen,
   die Glasfasern, die in dem Glasfaser-verstärktes Harz umfassenden Formkörper enthalten sind, eine zahlengemittelte Faserlänge L ($\mu$m) in einem Bereich von 195 bis 225 $\mu$m aufweisen,
   der Glasfaser-verstärktes Harz umfassende Formkörper eine Glasfaser-Volumenfraktion V (%) in einem Bereich von 6,0 bis 25,0 % aufweist und
   D, L und V die folgende Formel (1) erfüllen:

$$400,0 \leq D^2 \times L/V \leq 700,0 \qquad\qquad (1),$$

   wobei der Faserdurchmesser D und die zahlengemittelte Faserlänge L gemäß Angabe in der Beschreibung bestimmt werden und die Glasfaser-Volumenfraktion V gemäß JIS K 7053 bestimmt wird.

2. Glasfaser-verstärktes Harz umfassender Formkörper gemäß Anspruch 1, wobei

   D einen Wert in einem Bereich von 4,5 bis 7,0 $\mu$m aufweist,
   L einen Wert in einem Bereich von 200 bis 223 $\mu$m aufweist,
   V einen Wert in einem Bereich von 10,0 bis 20,0 % aufweist, und

D, L und V die folgende Formel (2) erfüllen:

$$29{,}7 \leq D^{4/5} \times L^2/(1000 \times V^{2/3}) \leq 34{,}8 \qquad (2).$$

**Revendications**

1. Article moulé en résine renforcée par des fibres de verre, dans lequel les fibres de verre contenues dans l'article moulé en résine renforcée par des fibres de verre ont un diamètre de fibre D ($\mu$m) dans une plage comprise entre 4,0 et 7,5 $\mu$m ;

les fibres de verre contenues dans l'article moulé en résine renforcée par des fibres de verre ont une longueur de fibre moyenne en nombre L ($\mu$m) dans la plage comprise entre 195 et 225 $\mu$m ;
l'article moulé en résine renforcée par des fibres de verre a une fraction volumique de fibre de verre V (%) dans la plage comprise entre 6,0 et 25,0 % ; et
D, L et V satisfont à la formule (1) :

$$400{,}0 \leq D^2 \times L/V \leq 700{,}0... \ (1),$$

moyennant quoi le diamètre de fibre D et la longueur de fibre moyenne en nombre L sont déterminés comme spécifiés dans le cahier des charges et la fraction volumique de fibre de verre V est déterminée conformément à la norme JIS K 7053.

2. Article moulé en résine renforcée par des fibres de verre selon la revendication 1, dans lequel D se situe dans la plage comprise entre 4,5 et 7,0 $\mu$m ;

L se situe dans la plage comprise entre 200 et 223 $\mu$m ;
V se situe dans la plage comprise entre 10,0 et 20,0 % ; et
D, L et V satisfont à la formule (2) :

$$29{,}7 \leq D^{4/5} \times L^2/(1000 \times V^{2/3}) \leq 34{,}8... \ (2).$$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2873800 A1
- EP 2695913 A1
- WO 2012137271 A1
- JP 2016166276 A
- JP 2013155311 A
- WO 2013147069 A1
- JP 2001026701 A
- JP 2017052974 A
- JP H04292651 A
- JP 2013216003 A
- JP 2009269952 A